# EUROPEAN PATENT APPLICATION

(11) **EP 2 260 698 A2**
(43) Date of publication of application: **15.12.2010**
(21) Application number: 10251071.6
(22) Date of filing: 11.06.2010
(51) Int. Cl.: A01K 1/03

(54) **Pet housing**

(30) Priority: 12.06.2009 GB 0910181
(71) Applicant: Vax Limited, Droitwich, Worcestershire WR9 0QH (GB)
(72) Inventor: Williams, Thomas, Bromsgrove Worcestershire B60 2NJ (GB)
(74) Representative: Every, David Aidan

(57) **Abstract**

A pet housing includes forced air ventilation and filtration for circulating air within the housing, thus cleaning air in the housing and mitigating the effects of pet dander, dust and odour. Air inlets and outlets (52) are in the vicinity of the floor (16) of the housing. A sensing device detects whether an animal is occupying the housing, and a controller coupled to the detector controls selective operation of one of two different fans depending upon whether or not an animal is occupying the housing.

## Description

### Technical field

The present invention relates to housings for domestic pets, such as dogs or cats. A preferred embodiment of the pet housing is also a container in which an animal may be carried and transported.

### Background of the Invention

Pet beds and pet housings are for providing a resting place for pets during the day and a comfortable place to sleep at night. Many domestic animals have a bed or sleeping area which is within the main living area of a house (rather than in an outhouse or the like) and from which accumulated dander can spread through the house. A particular problem in a household which has one or more dogs or cats is the dander from the pet, i.e. microscopic flakes of dead skin, the animal fur or hair, secretions from when the animal grooms itself, and so forth. Pet dander and dust may cause irritation to sensitive people. Even if an animal is confined to a single room of a house, the dander can be carried throughout a house in the air and by movement of people. Frequent and thorough cleaning of the animals' sleeping area is of assistance in reducing the problem, but in many cases animals are free to move through most or all of the house, and it is virtually impossible to clean an entire house with the thoroughness and frequency necessary to eliminate the problem.

Pet housings and like enclosures are known in the prior art to employ forced ventilation combined with filtration capabilities, as in U.S. Pat. Nos. 5,148,768. While such products provide worthwhile advantages, it will be understood that there remains a need for pet housings offering improved performance with regard to mitigating the effects of pet dander, dust and odour.

### Disclosure of the Invention

According to one aspect of the present invention, there is provided a pet housing, comprising a support member; a cover for at least part of the support member, to define and at least partially enclose an occupation space above the support member for occupation by the animal; a passageway in the support member or cover, the passageway having an inlet in communication with a first part of the occupation space and an outlet in communication with a second part of the occupation space remote from the first part, a ventilator for circulating air through the passageway from the inlet to the outlet, and a filter for removing at least some airborne matter from the air circulated through the passageway.

A housing in accordance with the invention tackles the problem of animal-originating dander, dust by filtration to remove particulate matter from the air in the immediate vicinity of the animal's housing, reducing spread of the particulate matter from this source. It cannot, of course, have any effect on the spread of matter by an animal free to roam through a house, but since the animal's housing is a 'hot spot' from which this matter can spread through a house it has been found to be very beneficial in tackling the overall problem.

The filtration means, by which the air drawn from the space occupied by an animal in the housing is filtered, must be extremely effective if it is to remove dander from the air. Therefore, a number of filter stages may be provided, for example at least some and preferably all of the following:
firstly, a membrane filter able to remove pet hair and large dust particles from air passing through the filter;
secondly, an electrostatic filter able to remove smaller dander particles and larger pollen particles;
thirdly, a HEPA filter able to remove even smaller dander particles, dust mite faeces, and pollen; and
finally, a carbon filter able to remove odours.

A filter element incorporating the above stages may have an adhesive quality to collect any stray hairs or the like; it may also have an anti-bacterial quality.

Air withdrawn from the animal occupation space of the housing and having passed through the filter may be returned to the animal occupation space, at a part thereof remote from the part at which it has been withdrawn, e.g. the opposite side of the animal occupation space.

The inlet is preferably in the vicinity of a floor of the support member on which the animal can rest. The support member may carry a cushion or like element of a material and construction which is comfortable for an animal to rest upon.

The animal housing may comprise a upper part which includes the support member and cover (and hence affords the space to be occupied by an animal), and a lower part to which the upper part is removably connected and which holds the ventilator and filter.

The upper part of the housing preferably connects to the lower part on the top thereof, and may be slidable into engagement therewith. The support member and cover may be removably connected the lower part, the lower part having passages in which the ventilator and filter are disposed, which passages register with the passageway in the support member or cover, when the upper part is fitted to the lower part.

Preferably the cover includes an aperture, and the pet housing further includes a door for closing the aperture and the outlet is in the vicinity of a floor of the support member. The door which is able to be moved between open and closed positions in relation to the support member and cover, and which, when in its closed position, is effective to constrain an animal within the occupation space. It will be appreciated that with such provision the upper part of the housing may be used as an animal-carrying container, if the animal is to be transported under circumstances in which it cannot remain out in the open. Such circumstances might arise if an animal is to be taken on public transport or if it is to be taken to a veterinary practice.

The door may be completely removable from the upper part of the housing when it is not required to constrain the animal for transportation. In this case, the lower part of the housing may provide a recess for storage of the door so that it is kept to hand and readily accessible. To facilitate its use as animal transportation container, the upper part of the housing may be provided with a handle formation.

For drawing air from the occupation space of the housing (and if required returning it thereto), the lower part of the housing may be provided with at least one fan. Preferably, there are two fans having different capacities for causing flow of air of which a first fan provides a relatively small air flow and operates very quietly. Such a fan may operate even when an animal is occupying the housing. A second fan may be provided to cause a greater flow of air, for cleaning the occupation space when an animal is not present.

A sensing device or devices may be provided, for determining whether an animal is occupying the housing. A controller coupled to the detector may control operation of the ventilator depending upon whether or not an animal is occupying the housing.. Such a sensing device may be operated mechanically e.g. in response to the weight of an animal on the support member or a part thereof, or a non-contact sensing device or devices may be utilised to detect the entering and leaving of the occupation space by an animal.

When an animal enters the occupation space of the housing, the first fan, which provides a relatively low air flow, is caused to operate, and remain in operation as long as the housing is occupied. When the animal leaves the occupation space of the housing, the second fan which provides a higher air flow may be started while the first-mentioned fan is stopped, the second fan operating for a timed period e.g. 15 minutes to draw accumulated dander from the support member region and any bedding material thereon.

When the upper part of the housing is removed from the lower part, the user is provided with access to the filter 68. The fans in the lower part may be operable with the upper part remobved, in which case it acts as an air cleaner, drawing air from the region around the lower part and returning it thereto.

In another aspect the invention may be provided by any novel feature, or novel combination of features described herein, and/or shown in the accompanying drawings.

### Brief Description of the Drawings

The invention will now be described by way of example with reference to the accompanying drawings, of which:
Figure 1 is a perspective view of an animal housing in accordance with the invention;
Figure 2 is a cross-section lengthways of the animal housing;
Figure 3 is an underneath view of a upper part of the housing;
Figure 4 is a diagrammatic plan view of a lower part of the housing;
Figure 5 is a plan view of operative components within the lower part of the housing.

### Description of the Preferred Embodiments

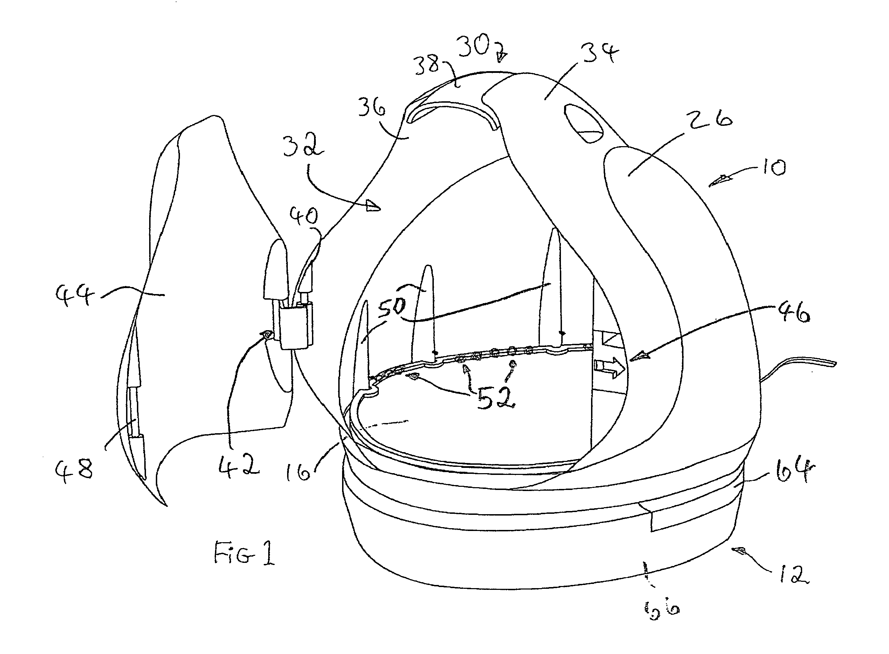

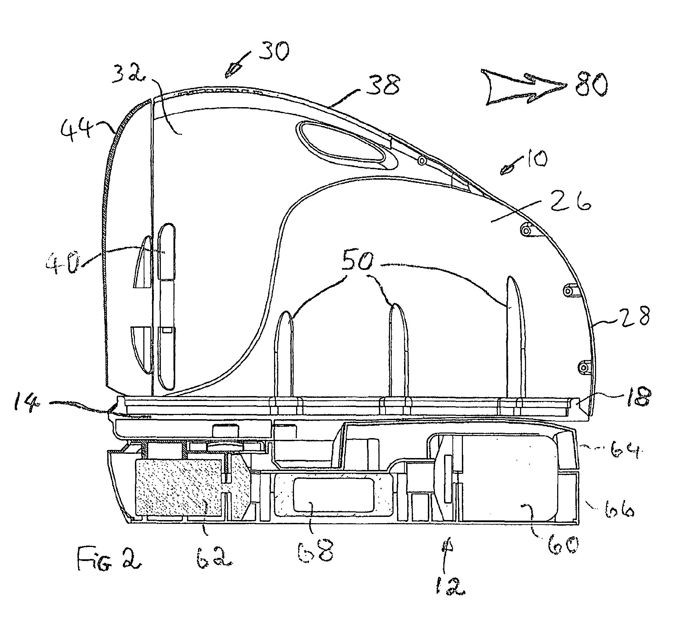

Referring Figs 1 and 2 of the drawings, a pet housing generally comprises an upper part 10 and a base or lower housing part 12. The upper and lower parts are removably connected to one another as described below. The lower part 12 has a lower surface which is flat or has formations enabling it to rest on a floor or other flat surface in a stable manner.

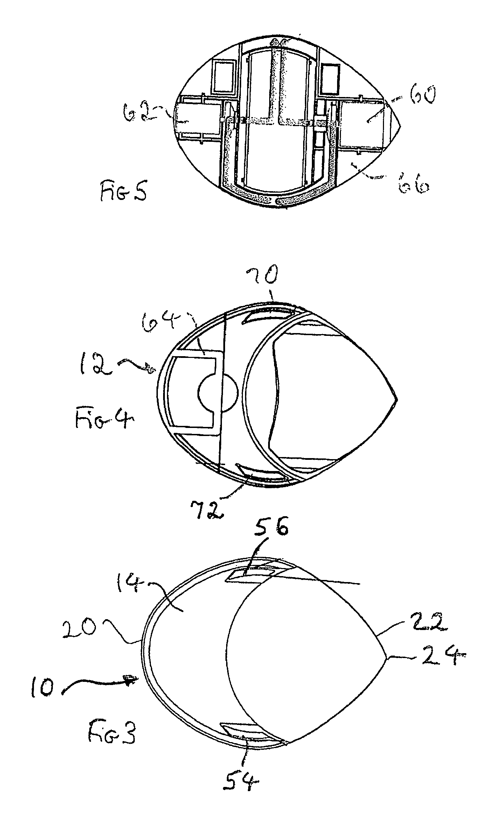

The upper part 10 comprises a support member 14 for supporting the animal and which includes a generally flat floor 16 with a peripheral rim 18. In plan view the shape of the support member 14 is as seen in Figs 3 to 5, being somewhat egg shaped with a curved front end indicated at 20 in Fig 3 and a gothic-arch shaped rear end 22 with an apex 24. To the support member 14 is secured a superstructure or cover 26 whose shape is a number of complex curves, rising from a rear wall 28 fitting closely about the rim 18 of the support member 14 to a crest 30 and a front animal-access aperture 32. The cover 26 comprises two side components 34, 36 of moulded opaque plastics material secured to one another with a central component 38 which may be of a transparent or translucent plastics material, therebetween these component 34, 36, 38 being secured to one another in any suitable manner. Hence the cover extends over all the support member 14 with the exception of a small part at the front end 20 thereof, to define a space which is large enough for occupation by a cat or small dog.

The component 36 of the cover 26 is provided, at its front end, with a mounting 40 for a hinge arrangement indicated generally at 42, by which a door 44 is pivotably secured to the component 36. The door 44 is shown in Fig. 1 in an open position and the hinge 42 enables it to pivot to a closed position in which it substantially closes the aperture 32 at the front of the cover. It may be held in the closed position by a catch mechanism indicated generally at 46 co-operable with a member 48 on the door 44, remote from the hinge 42. Preferably the hinge 42 provides for complete detachment of the door 44 from the cover 26 when required.

Internally, each of the side components 34, 36 is provided with upwardly extending reinforcing ribs 50 projecting into the interior of the component 3. At the lowermost end of each of these ribs 50 there is an upwardly-extending opening for receiving a respective locating pin by which the cover is aligned and connected to the support member 14, being secured thereto by a detachable clip, not shown.

Visible in Fig. 1 are a number of apertures 52 which communicate with an internal duct, not shown, at the rim of the support member 14 which opens downwardly at 54 (Fig. 3). Corresponding apertures and ducts are provided at the opposite side of the support member 14, whose communicating duct opens downwardly at 56 as shown in Fig. 3.

The lower part 12 of the housing is provided with two electric motors 60, 62 which drive respective fans. These motors 60, 62 are disposed respectively adjacent the rear and front of the lower part 12, supported within a body comprising upper and lower moulded plastics components 64, 66. A filter assembly 68 extends transversely of the lower part 12, and preferably is of the construction above described, providing for filtration of air to HEPA standard by a number of filtration stages. The lower part 12 is provided with suitable ducting not herein described in detail, having upwardly facing duct inlet/outlet formations seen at 70, 72 in Fig 4, which openings, when the upper part 10 of the housing is fitted to the bottom part 12, register with the duct openings 54, 56 respectively in the upper part. The arrangement of the electric motors 60 and 62 and their respective fans is such that operation of either motor is able to cause air to be drawn from the interior space of the upper part, which can be occupied by an animal, by way of the apertures as 52 (but at the opposite side of the support member) and through the ducting leading to the duct opening 56 and through the filtration assembly 68 for cleaning. Thence, air is directed to the duct opening 70 registering with the duct opening 54 in the support member 14, and to the openings 52 to re-enter the animal occupation space of the cover 10.

The motor 60 preferably is a more powerful motor than the motor 62. The motor 62 may be operable when the upper part is occupied by an animal, to cause a relatively low air flow under these conditions. When the animal leaves the occupation space of the upper part, the motor 60 may be brought into operation for a set time, e.g. 15 minutes, to effect cleaning of the occupation space by a higher air flow. Particularly the motor 60, and preferably also the motor 62, preferably causes air to be returned to the upper part under sufficient pressure to ensure that it can emerge from the apertures 52 even if one or more of them are obscured by any bedding in the occupation space. The arrangement of an inlet set of apertures 52 and an outlet set of apertures 52 on opposing sides of the housing, adjacent the floor 16 allows this circulating air flow to entrain particulate matter within the housing, for subsequent removal by the filter.

The cover 10 of the housing may be engageable with the lower part 12 by sliding movement of the upper part relatively to the lower part in the direction indicated by arrow 80 in Fig 2, the respective parts having suitable engagement formations for this purpose. The configuration is such that the sliding movement is limited so that the duct openings 54, 56 align with the duct openings 70, 72 respectively when the formations are fully in engagement with one another. To move the upper part from the lower part, the upper part 30 is slid in the direction opposite to that shown by arrow 80.

A suitable controller is provided for causing operation of the motors 60, 62 as required. A sensing device or devices is provided for determining whether the upper part of the housing is occupied by an animal, and the control circuit operates the motors in response to the signals provided by the sensing device(s).

When the upper part of the housing is not connected to the lower part, the lower part may be operated alone, in which case it functions as an air purifier to draw air from the ambient atmosphere, pass it through the filtration means 68, and return it to the atmosphere.

Although as illustrated the apertures 50 are approximately level with the surface of any bedding in the occupation space of the upper part of the housing, apertures and suitable ducting may be provided to cause air to flow through the occupation space in any desired manner. For example, air may be drawn from the space at the bottom thereof and returned at the top, to flow downwardly therethrough.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A pet housing, comprising a support member; a cover for at least part of the support member, to define and at least partially enclose an occupation space above the support member for occupation by the animal; a passageway in the support member or cover, the passageway having an inlet in communication with a first part of the occupation space and an outlet in communication with a second part of the occupation space remote from the first part, a ventilator for circulating air through the passageway from the inlet to the outlet, and a filter for removing at least some airborne matter from the air circulated through the passageway.

2. A pet housing according to claim 1 wherein the inlet is in the vicinity of a floor of the support member on which the animal can rest.

3. A pet housing according to claim 1 or claim 2 wherein the housing further comprises a lower part holding the ventilator and filter, and wherein the support member and cover are removably connected the lower part, the lower part having passages in which the ventilator and filter are disposed, which passages register with the passageway in the support member or cover, when the upper part is fitted to the lower part.

4. A pet housing according to claim 3 wherein the support member connects to the lower part on the top thereof and the support member is slidable into engagement with the lower part.

5. A pet housing according to any one of claims 1 to 4 wherein the cover includes an aperture, and the pet housing further includes a door for closing the aperture and the outlet is in the vicinity of a floor of the support member.

6. A pet housing according to claim 5 wherein the door is removeable and the lower part of the housing has a recess for storage of the door when not mounted on the upper part.

7. A pet housing according to any one of the preceding claims wherein the upper part of the housing is provided with a handle formation.

8. A pet housing according to any one of the preceding claims further comprising at least one sensing device, for detecting whether an animal is occupying the housing, and a controller coupled to the sensing device to control operation of the ventilator depending upon whether or not an animal is occupying the housing.

9. A pet housing according to claim 8 wherein the ventilator comprises first and second fans, of which the first fan has a relatively smaller air flow capacity than the second and wherein the controller causes operation of the first fan when an animal is occupying the housing and operation of the second fan when an animal is not occupying the housing.

10. A pet housing according to claim 8 or claim 9 wherein the sensing device is operated mechanically or is a non-contact device.

11. A pet housing according to any one of the preceding claims wherein when the support member and cover are removed from the lower part of the housing, the ventilator and the filter are operable.
